# EUROPEAN PATENT APPLICATION

(11) **EP 1 826 028 A1**
(43) Date of publication of application: **29.08.2007**
(21) Application number: 05799096.2
(22) Date of filing: 27.10.2005
(51) Int. Cl.: B60C 23/00

(54) **ABNORMALITY JUDGING DEVICE**

(30) Priority: 02.11.2004 JP 2004319941; 02.11.2004 JP 2004319943; 03.10.2005 JP 2005290452
(71) Applicant: Bridgestone Corporation, Tokyo 104-8340 (JP)
(72) Inventor: KOBAYASHI, Katsuhiro Bridgestone Corporation Technical Center, Tokyo 187-8531 (JP); MURAKAMI, Kazumoto Bridgestone Corporation Technical Center, Tokyo 187-8531 (JP); UEDA, Hiroyuki Bridgestone Corporation Technical Center, Tokyo 187-8531 (JP)
(74) Representative: Whalley, Kevin
(86) International application number: PCT/JP2005/019768
(87) International publication number: WO 2006/049073

(57) **Abstract**

A detecting unit 210 detects a physical quantity generated from a revolving tire for each tire. An adaptive digital filter 222 extracts a specific signal for each tire from signals corresponding to the physical quantity detected by the detecting unit 210. A judging unit 230 judges that the tire is abnormal when a difference value between two signals extracted by the digital filter 222 exceeds a predetermined threshold.

## Description

### 1. Technical Field

The present invention relates to an abnormality judging device for judging whether or not a tire is abnormal.

### 2. Background Art

Abnormality judging devices for judging whether or not a tire is abnormal have heretofore been provided. For example, provided is an abnormality judging device which judges that a tire is abnormal if the inner pressure of the tire is equal to or below a certain value, and which then notifies a driver of such an abnormality by an alarm or the like.

Nevertheless, abnormalities of the tire that occur due to factors other than the inner pressure of the tire are not detected with the above-mentioned abnormality judging device. For example, the abnormalities of the tire occurring due to factors other than the inner pressure of the tire include detachment between a tread and a belt, between codes constituting belts or between side rubber and a carcass ply; fracture of a ply code or a belt code; chunk-out of a tread (such as a state where a block land portion provided on a tread is stripped off) ; and the like. If a vehicle continues to run in a state where its tire has these abnormalities, the tire may burst. Thereby, the vehicle may be incapable of running, and a serious accident may be incurred as a consequence.

For this reason, proposed is an abnormality judging device which judges an abnormality of a tire caused by factors other than the inner pressure of the tire. For example, physical quantities including vibration and sound generated from the tire is measured to obtain data thereof, and then the data obtained by the measurement are compared with preset data. An abnormality judging device which judges whether or not a tire is abnormal by using this method has been disclosed (Japanese Patent Application Laid-open Publication No. 2003-80912, for example).

However, the above abnormality judging device measures not only the physical quantities concerning the abnormality of the tire but also physical quantities concerning other noises. For this reason, it is difficult to accurately judge whether or not the tire is abnormal.

The present invention has been made in consideration of the foregoing perspective. An object of the present invention is to provide an abnormality judging device capable of accurately judging whether or not a tire is abnormal.

### Disclosure of the Invention

To attain the object, a first aspect of the present invention is characterized by including detecting means (such as a detecting unit 210) which detects a physical quantity generated from a revolving tire, variable sampling means (such as a variable sampling circuit 221) which samples a signal corresponding to the physical quantity detected by the detecting means, at a cycle corresponding to a revolving speed of the tire, FFT processing means (such as a FFT processing unit 223) which converts a signal along the time axis sampled by the variable sampling means, into a signal along the frequency axis, and judging means (such as a judging unit 223) which judges that the tire is in an abnormal state when the signal converted by the FFT processing means exceeds a predetermined threshold.

A second aspect of the present invention is characterized by including an adaptive digital filter (such as an adaptive digital filter 222) which extracts a signal from the signals sampled by the variable sampling means, and is characterized in that the FFT processing means (such as the FFT processing unit 223) converts a signal along the time axis extracted by the adaptive digital filter into a signal along the frequency axis.

A third aspect of the present invention is characterized by including detecting means (such as the detecting unit 210) which detects a physical quantity generated from a revolving tire, variable sampling means (such as the variable sampling circuit 221) which samples a signal corresponding to the physical quantity detected by the detecting means, at a cycle corresponding to a revolving speed of the tire, specific order component extracting means (such as a specific order component extracting unit 224) which extracts signals of multiple specific order components from a signal sampled by the variable sampling means, and judging means (such as the judging unit 223) which judges that the tire is in an abnormal state when the signals extracted by the specific order component extracting means exceed a predetermined threshold.

A fourth aspect of the present invention is characterized by including an adaptive digital filter (such as the adaptive digital filter 222) which extracts a specific signal from the signals sampled by the variable sampling means, and is characterized in that the specific order component extracting means (such as the specific order component extracting unit 224) extracts the signals of the multiple specific order components from the signals extracted by the adaptive digital filter.

A fifth aspect of the present invention is characterized by including detecting means (such as the detecting unit 210) which detects a physical quantity generated from a revolving tire, variable sampling means (such as the variable sampling circuit 221) which samples a signal corresponding to the physical quantity detected by the detecting means, at a cycle corresponding to a revolving speed of the tire, adding means (such as a synchronous adding unit 226) which adds up the signals per unit of revolutions sampled by the variable sampling means, sequentially for each unit of revolutions, and judging means (such as the judging unit 230) which judges that the tire is in an abnormal state when the signals added up by the adding means exceed a predetermined threshold.

A sixth aspect of the present invention is characterized by including an adaptive digital filter (such as the adaptive digital filter 222) which extracts a specific signal from the signals sampled by the variable sampling means, and is characterized in that the adding means (such as the synchronous adding unit 226) adds up the signals per unit of revolutions, extracted by the adaptive digital filter, sequentially for each unit of revolutions.

A seventh aspect of the present invention is characterized by including detecting means (such as the detecting unit 210) which detects a physical quantity generated from a revolving tire, specific order component extracting means (such as the specific order component extracting unit 224) which extracts signals of multiple specific order components corresponding to a revolving speed of the tire, from a signal corresponding to the physical quantity detected by the detecting means, and judging means (such as the judging unit 230) which judges that the tire is in an abnormal state when the signals extracted by the specific order component extracting means exceed a predetermined threshold.

An eighth aspect of the present invention is characterized by including detecting means (such as the detecting unit 210) which detects a physical quantity generated from a revolving tire for each tire, extracting means (such as an extracting unit 220) which extracts a specific signal from signals corresponding to the physical quantity detected by the detecting means for each tire, and judging means (such as the judging unit 230) which judges that the tire is in an abnormal state when a difference value between two signals extracted by the extracting means exceeds a predetermined threshold.

A ninth aspect of the present invention is characterized in that the extracting means is an adaptive digital filter (such as the adaptive digital filter 222).

A tenth aspect of the present invention is characterized in that the judging means (such as the judging unit 230) judges that the tire is abnormal when any of the difference value between signals corresponding respectively to two tires rotatably and pivotally supported on the same shaft, and the difference value between a signal corresponding to a front tire and a signal corresponding to a rear tire provided in a traveling direction of the front tire, out of the signals extracted by the extracting means, exceeds the predetermined threshold.

An eleventh aspect of the present invention is characterized in that the judging means (such as the judging unit 230) judges that the tire is abnormal in a case where the difference value between the signals corresponding respectively to the two tires rotatably and pivotally supported on the same shaft, out of the signals extracted by the extracting means, exceeds a predetermined threshold at the time when a vehicle is running at a constant speed or is in the course of acceleration or deceleration.

A twelfth aspect of the present invention is characterized in that the judging means (such as the judging unit 230) judges that the tire is abnormal in a case where the difference value between the signal corresponding to the front tire and the signal corresponding to the rear tire provided in the traveling direction of the front tire, out of the signals extracted by the extracting means, exceeds a predetermined threshold at the time when a vehicle is running at a constant speed or is turning.

A thirteenth aspect of the present invention is characterized in that the judging means (such as the judging unit 230) judges that the tire is abnormal in a case where the difference value between the signal corresponding to the front tire and a signal corresponding to a rear tire provided in a diagonal direction to the front tire, out of the signals extracted by the extracting means, exceeds a predetermined threshold at the time when a vehicle is running normally.

A fourteenth aspect of the present invention is characterized in that the threshold is equal to a difference value of the signals corresponding respectively to tires which are normal.

A fifteenth aspect of the present invention is characterized in that in a case where there is a difference between the average value of the signals corresponding to the front tire and the average value of the signals corresponding to the rear tire out of the signals extracted by the extracting means, the judging means (such as the judging unit 230) judges that the tire is abnormal at the time when the difference value between the signal corresponding to the front tire and the signal corresponding to the rear tire exceeds the predetermined threshold after any one of the average values is aligned with the other average value.

A sixteenth aspect of the present invention is
characterized in that the judging means (such as the judging unit 230) judges that the tire is abnormal when the difference value between the two smallest signals out of the signals extracted by the extracting means exceeds the predetermined threshold.

### Brief Description of the Drawings

[Fig. 1] Fig. 1 is a view showing an abnormality judging apparatus according to a first embodiment.
[Fig. 2] Fig. 2 is a view showing an extracting unit in the first embodiment (No. 1).
[Fig. 3] Fig. 3 is a view showing a signal converted by a FFT processing unit in the first embodiment.
[Fig. 4] Fig. 4 is a view showing the extracting unit in the first embodiment (No. 2).
[Fig. 5] Fig. 5 is a view showing the extracting unit in the first embodiment (No. 3).
[Fig. 6] Fig. 6 is a view showing the extracting unit in the first embodiment (No. 4).
[Fig. 7] Fig. 7 is a view showing the extracting unit in the first embodiment (No. 5).
[Fig. 8] Fig. 8 is a view showing a signal to be outputted to a synchronous adding unit in the first embodiment.
[Fig. 9] Fig. 9 is a view showing an abnormality judging device according to a second embodiment (No. 1).
[Fig. 10] Fig. 10 is a view showing the abnormality judging device according to the second embodiment (No. 2)
[Fig. 11] Fig. 11 is a view showing signals converted by a FFT processing unit in the second embodiment.
[Fig. 12] Fig. 12 is a view showing a frequency of an order component P1 and frequencies in a vicinity thereof in the second embodiment.
[Fig. 13] Fig. 13 is a view showing tires and signals concerning the respective tires according to a third embodiment.
[Fig. 14] Fig. 14 is a view showing driving conditions of a vehicle and judging elements in the third embodiment (No. 1) . [Fig. 15] Fig. 15 is a view showing the driving condition of the vehicle and the judging element in the third embodiment (No. 2).
[Fig. 16] Figs. 16 (a) and 16 (b) are views showing a temporal variation of values of difference between two judgment output values in an example.
[Fig. 17] Fig. 17 is a view showing a temporal variation of each of the judgment output values in the example.

### Best Modes for Carrying Out the Invention

### [First embodiment]

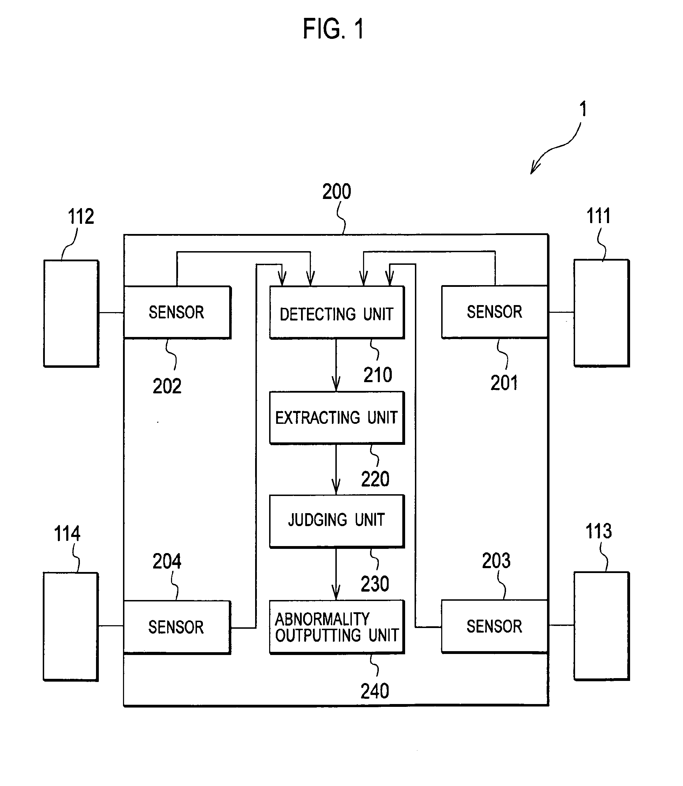

An abnormality judging device 1 in this embodiment will be described with reference to the accompanying drawings. Fig. 1 is a view showing the abnormality judging device 1 in this embodiment. As shown in Fig. 1, the abnormality judging device 1 is mounted on a vehicle, for example. The abnormality judging device 1 includes sensors 201 to 204, a detecting unit 210, an extracting unit 220, a judging unit 230 and an abnormality outputting unit 240.

The sensors 201 to 204 detect physical quantities generated from revolving tires. The sensors 201 to 204 are respectively disposed close to tires 111 to 114. The physical quantities in this embodiment include vibrations and sounds generated in the tires or in suspension components such as suspensions; the number of revolutions; a revolving speed or acceleration; and so forth.

The detecting unit 210 is detecting means which detects signals corresponding to the physical quantities detected by the sensors 201 to 204. The extracting unit 220 extracts a specific signal out of the signals detected by the detecting unit 210.

The judging unit 230 is judging means which judges that any of the tires 111 to 114 is abnormal, in a case where the signal extracted by the extracting unit 220 exceeds a predetermined threshold. The abnormality outputting unit 240 is notifying means which notifies, in a case where the judging unit 230 judges that any one of the tries is abnormal, the abnormality by outputting a sound or by displaying an image or a lamp.

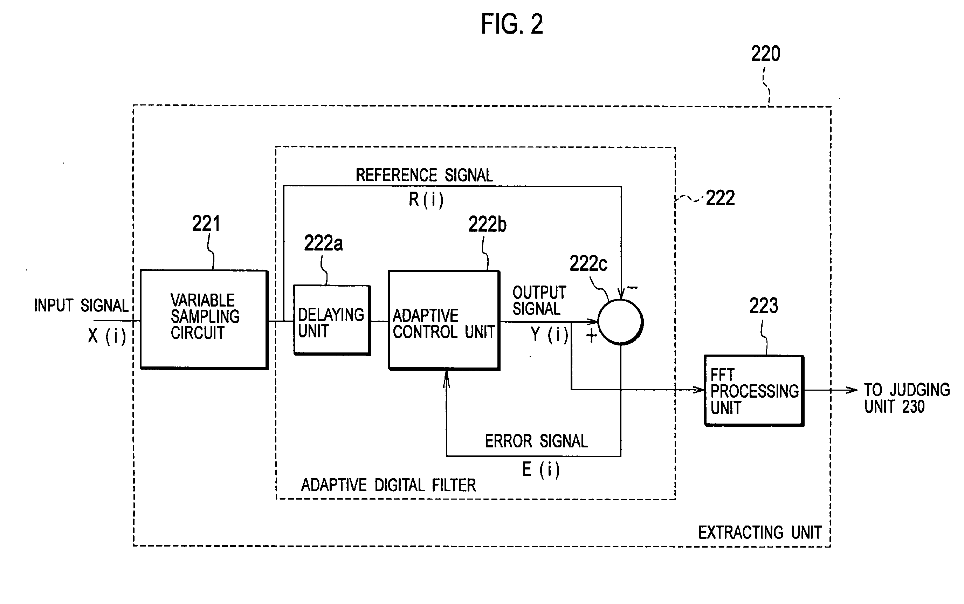

Fig. 2 is a view showing an internal structure illustrating the extracting unit 220 in this embodiment. As shown in Fig. 2, the extracting unit 220 includes a variable sampling circuit 221, an adaptive digital filter 222 and a FFT processing unit 223.

The variable sampling circuit 221 is variable sampling means which samples an input signal x(i) corresponding to the physical quantity detected by the detecting unit 210 at a cycle corresponding to the revolving speed of the tires 111 to 114.

To be more precise, the variable sampling circuit 221 sets a larger sampling number for the signals x (i) than a usual case (or sets a shorter cycle) when the revolving speed of the tires 111 to 114 is faster than a reference speed. The variable sampling circuit 221 sets a smaller sampling number for the signals x (i) than a usual case (or sets a longer cycle) when the revolving speed of the tires 201 to 204 is slower than the reference speed.

In this way, the sampling number for the signals x(i) is increased as the revolving speed of the tires 111 to 114 increases, and thus finer sampling is possible. For this reason, the apparent sampling number for the signals x(i) is made constant, and thereby an adaptive control unit 222b to be described later can extract a specific signal y(i) from the signals x(i) irrespective of the revolving speed of the tires 111 to 114.

Note that the variable sampling circuit 221 does not need to be provided in a case where the adaptive control unit 222b to be described later extracts the specific signal y(i) from the signals x(i) only when the revolving speed of the tires 111 to 114 is constant.

The adaptive digital filter 222 extracts the specific signal out of the signal corresponding to the physical quantity detected by the detecting unit 210. The adaptive digital filter 222 includes a delaying unit 222a, the adaptive control unit 222b and a comparing unit 222c. Incidentally, the adaptive digital filter 222 does not need to be provided.

The delaying unit 222a delays the signal x(i) outputted from the variable sampling circuit 221.

Note that the delaying unit 222a may set time spent for one revolution of the tires 111 to 114 as delay time for each signal x (i) . Alternately, the delaying unit 222a may set the delay time for each signal x(i) in response to the revolving speed of the tires 111 to 114. Although the delaying unit 222a is located between the detecting unit 210 and the adaptive control unit 222b, it may be located between the detecting unit 210 and the comparing unit 222c.

The adaptive control unit 222b extracts y(i) being the specific signal, out of the delayed signals x(i) on the basis of the delayed signals x(i) and a signal E(i) (= R(i) - y (i)) outputted from the comparing unit 222c.

To be more precise, the adaptive control unit 222b successively changes a coefficient in the adaptive digital filter 222 in response to the signal E(i) outputted from the comparing unit 222c, by use of the minimum mean square method, the Newton method or the steepest descent method. The adaptive control unit 222b outputs y (i), being the specific signal, out of the signals x(i).

The comparing unit 222c outputs the signal E (i) which is a difference between the signal R(i) being the signal x(i) outputted from the variable sampling circuit 221 and y(i) being the signal outputted from the adaptive control unit 222b.

Here, the signal y(i) is the signal (the specific signal) synchronized with the revolutions of the tires 111 to 114, such as the signal which is periodically generated by occurrence of detachment or the like on the tires 111 to 114. Meanwhile, the signal E (i) is the signal unrelated to the signal y (i) such as a signal related to a road surface or a vehicle, besides the tires.

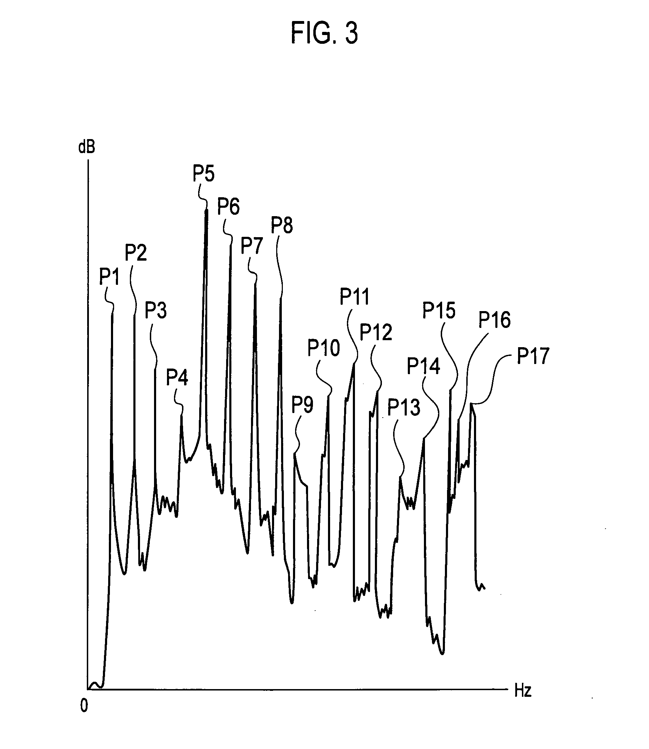

The FFT processing unit 223 is FFT processing means which converts the signal y(i) along the time axis, outputted from the adaptive control unit 222b, into a signal along the frequency axis. Fig. 3 is a view showing a signal converted by the FFT processing unit 223 in this embodiment. As shown in Fig. 3, when the signal y(i) along the time axis is converted into the signal along the frequency axis, signals representing multiple specific order components (P1, P2, P3 and so on) are very prominent.

Accordingly, the judging unit 230 to be described later can specify, with high accuracy, an abnormality of the tire synchronized with the revolutions of the tires 111 to 114 by use of these specific order component signals. Incidentally, the FFT processing unit 223 may convert a signal along the time axis, outputted from the variable sampling circuit 221, into a signal along the frequency axis.

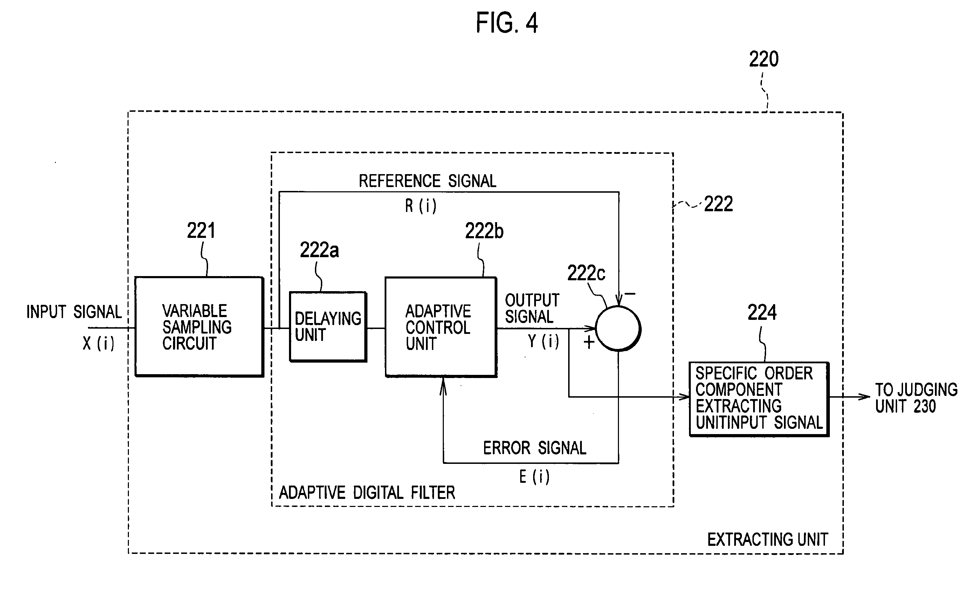

Fig. 4 is a view showing another example of the extracting unit 220 in this embodiment. As shown in Fig. 4, the extracting unit 220 includes the variable sampling circuit 221, the adaptive digital filter 222 and a specific order component extracting unit 224. The FFT processing unit 223 may be replaced with the specific order component extracting unit 224.

Among the units shown in Fig. 4, the same units as the units shown in Fig. 2 are designated by the same reference numerals. The functions of the units having the same reference numerals are identical to the contents described above with reference to Fig. 2. Accordingly, detailed description thereof will be omitted herein. It is to be noted that the adaptive digital filter 222 does not need to be provided.

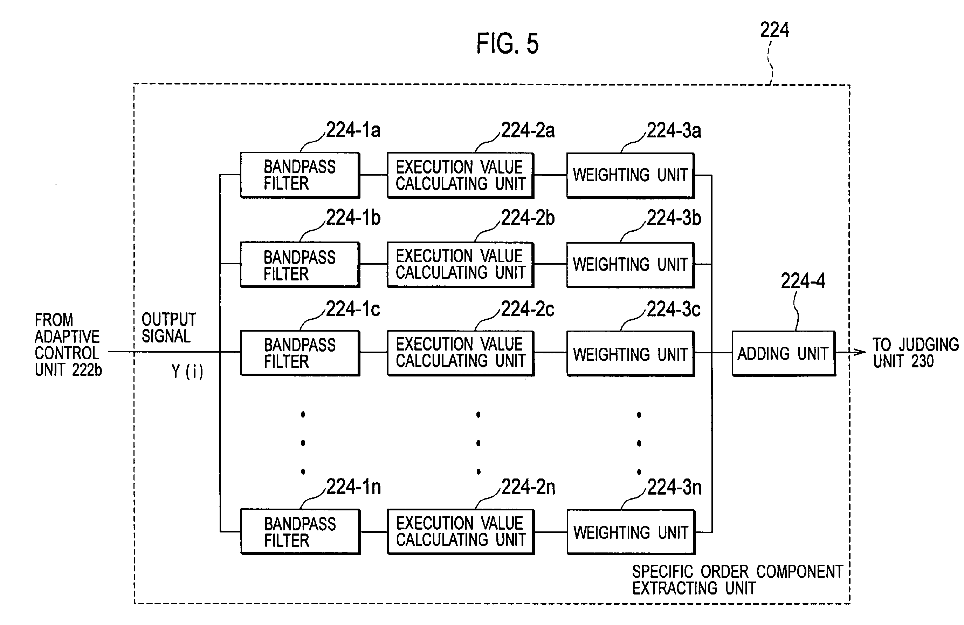

Fig. 5 is a view showing details of the specific order component extracting unit 224. As shown in Fig. 5, the specific order component extracting unit 224 includes bandpass filters 224-1a to 224-1n, execution value calculating units 224-2a to 224-2n, weighting units 224-3a to 224-3n and an adding unit 224-4.

The bandpass filters 224-1a to 224-1n are specific order component extracting means which extract specific order component signals out of the signal y(i) extracted by the adaptive digital filter 222. Note that the bandpass filters 224-1a to 224-1n may extract the specific order component signals from the signal outputted from the variable sampling circuit 221.

For example, the bandpass filters 224-1a extracts a signal of a first-order component (P1 shown in Fig. 3) from the signal y(i) extracted by the adaptive digital filter 222. Similarly, the bandpass filter 224-1b extracts a signal of a second-order component (P2 shown in Fig. 3) from the signal y(i) extracted by the adaptive digital filter 222. Incidentally, signals of third and higher order components are extracted similarly.

In this way, the bandpass filters 224-1a to 224-1n extract the specific order component signals directly from the signal y(i) without converting the signal y(i) along the time axis extracted by the adaptive digital filter 222 into the signal along the frequency axis. Accordingly, the bandpass filters 224-1a to 224-1n can extract the specific order component signals faster than the FFT processing unit 223.

The execution value calculating units 224-2a to 224-2n calculate execution values of the signals outputted from the bandpass filters 224-1a to 224-1n. Note that the execution value calculating units 224-2a to 224-2n may calculate average values or square values of the signals outputted from the bandpass filters 224-1a to 224-1n.

The weighting units 224-3a to 224-3n weight the signals outputted from the execution value calculating units 224-2a to 224-2n. In this way, the weighting units 224-3a to 224-3n can put weight of zero or the like on the specific order component signals unrelated to a periodical signal caused by occurrence of detachment or the like on the tires 111 to 114. Thereby, the periodic signal caused by occurrence of detachment or the like on the tires 111 to 114 can be extracted more accurately. The adding unit 224-4 adds up the signals outputted from the 224-3a to 224-3n.

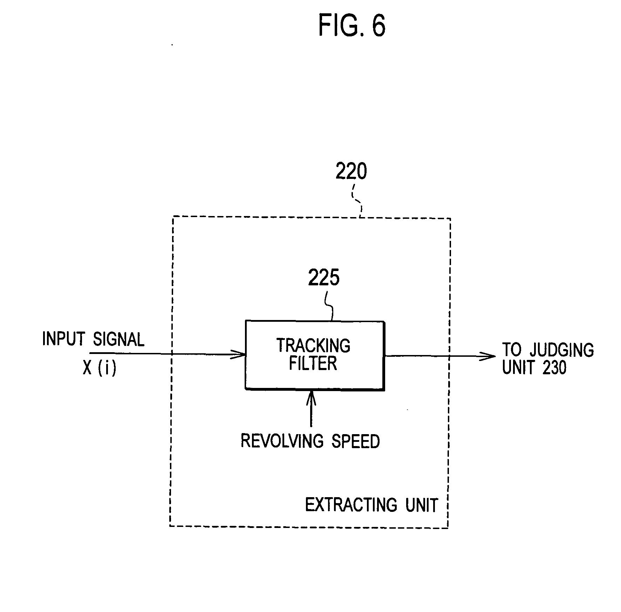

Fig. 6 is a view showing another example of the extracting unit 220 in this embodiment. As shown in Fig. 6, the extracting unit 220 includes a tracking filter 225. Among the units shown in Fig. 6, the same units as the units shown in Fig. 2 are designated by the same reference numerals. The functions of the units having the same reference numerals are identical to the contents described above with reference to Fig. 2. Accordingly, detailed description thereof will be omitted herein.

The tracking filter 225 extracts multiple specific order component signals, which correspond to the revolving speed measured by the sensors 201 to 204, from the signal extracted by the detecting unit 210.

For example, when the revolving speed is equal to A km/h, the tracking filter 225 extracts the signals of the specific order components (Pa1, Pa2, Pa3 and so on, for example) concerning the revolving speed of A km/h. Similarly, when the revolving speed is equal to B km/h, the tracking filter 225 extracts the signals of the specific order components (Pb1, Pb2, Pb3 and so on, for example) concerning the revolving speed of B km/h.

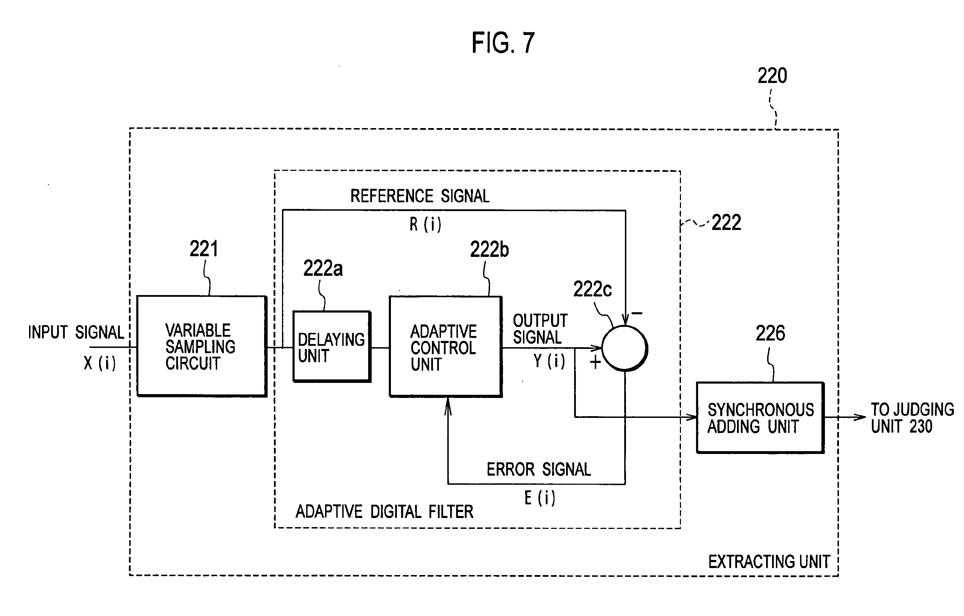

Fig. 7 is a view showing another example of the extracting unit 220 in this embodiment. As shown in Fig. 7, the extracting unit 220 includes the variable sampling circuit 221, the adaptive digital filter 222 and a synchronous adding unit 226. The FFT processing unit 223 may be replaced with the synchronous adding unit 226.

Among the units shown in Fig. 7, the same units as the units shown in Fig. 2 are designated by the same reference numerals. The functions of the units having the same reference numerals are identical to the contents described above with reference to Fig. 2. Accordingly, detailed description thereof will be omitted herein. It is to be noted that the adaptive digital filter 222 does not need to be provided.

The synchronous adding unit 226 is adding means which sequentially adds up the signals per unit of revolutions extracted by the adaptive digital filter 222 for each unit of revolutions. Note that the synchronous adding unit 226 may add the average signal per unit revolutions on the basis of the sequentially added signal.

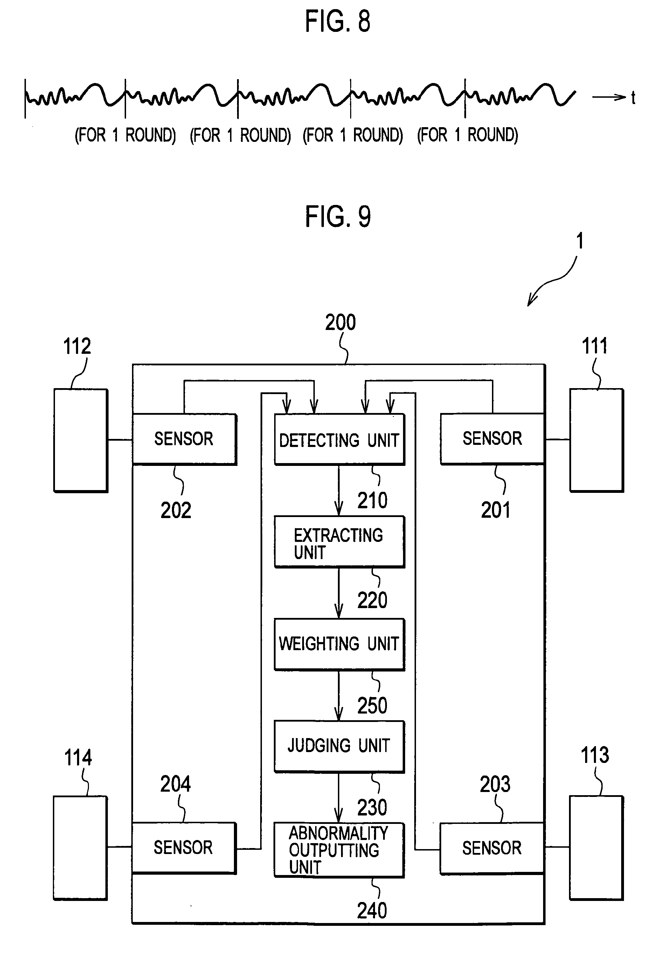

Fig. 8 is a view showing a signal per unit revolutions (such as per revolution) which is extracted by the adaptive digital filter 222. When the synchronous adding unit 226 adds up the signals per revolution sequentially for each revolution, periodical signals (signals of the specific order components of 10 Hz, 20 Hz, 30 Hz and so on, for example) caused by occurrence of detachment or the like on the tires 111 to 114 are added sequentially. In the meantime, random signals other than these periodical signals are cancelled out by other random signals.

Hence, the synchronous adding unit 226 can extract more accurately the periodical signals (the specific order component signals) caused by occurrence of detachment or the like on the tires 111 to 114. Note that the synchronous adding unit 226 may add the signals per unit revolutions, outputted from the variable sampling circuit 221, sequentially for each unit revolutions.

The above-described judging unit 230 judges that any of the tires is abnormal in a case where the signal outputted from the FFT processing unit 223, the specific order component extracting unit 224, the tracking filter 225 or the synchronous adding unit 226 exceeds a predetermined threshold.

### [Second embodiment]

Fig. 9 is a view showing an abnormality judging device 1 according to a second embodiment. As shown in Fig. 9, the abnormality judging device 1 in the second embodiment includes a weighting unit 250 in addition to the abnormality judging device 1 in the first embodiment. Among the units shown in Fig. 9, the same units as the units shown in Fig. 1 are designated by the same reference numerals. The functions of the units having the same reference numerals are similar to those described with reference to Fig. 1. Accordingly, detailed description thereof will be omitted herein.

Note that the abnormality judging device 1 does not need to include the weighting unit 250 in a case where it includes the weighting units 224-3a to 224-3n shown in Fig. 5.

The weighting unit 250 is the weighting means which weights each of the multiple specific order component signals out of the signals extracted by the extracting unit 200.

Here, among the signals extracted by the extracting unit 200, the periodical signal (such as a high-order component signal out of the multiple specific order component signals) caused by occurrence of a defect, such as detachment, on the tires 111 to 114 has a characteristic of having a smaller size than the size of a low-order component signal. For this reason, there may be a case where, even with a presence of the periodical signal attributable to detachment or the like, the periodical signal does not exceed the predetermined threshold. Accordingly, the judging unit 230 may fail to judge the defected tire as being abnormal.

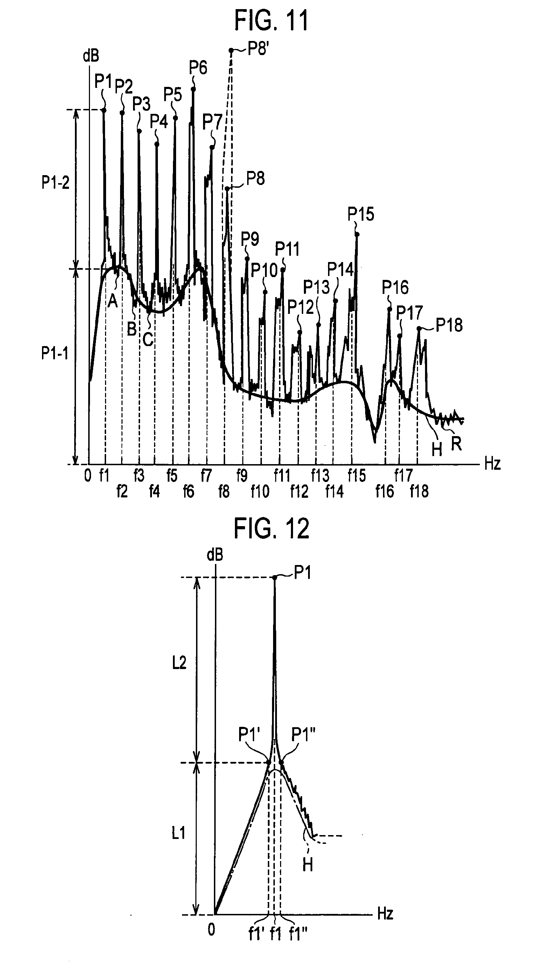

In this embodiment, when the periodical signal contains the multiple specific order component signals, the weighting unit 250 puts weights respectively on the multiple specific order component signals. Hence, the judging unit 230 can compare more appropriate specific order component signals (refer to Fig. 11) with the predetermined threshold, and thereby can judge, with higher accuracy, whether or not the tire is abnormal.

It is to be noted that the judging unit 230 is not limited to judge that any of the tires is abnormal in a case where, as a result of comparing the weighted multiple signals with the predetermined threshold, the signals exceed the predetermined threshold.

To be more precise, the judging unit 230 compares the total sum (or the average value) of the weighted signals with the predetermined threshold. When the total sum (or the average value) exceeds the predetermined threshold, the judging unit 230 may judge that any of the tires is abnormal.

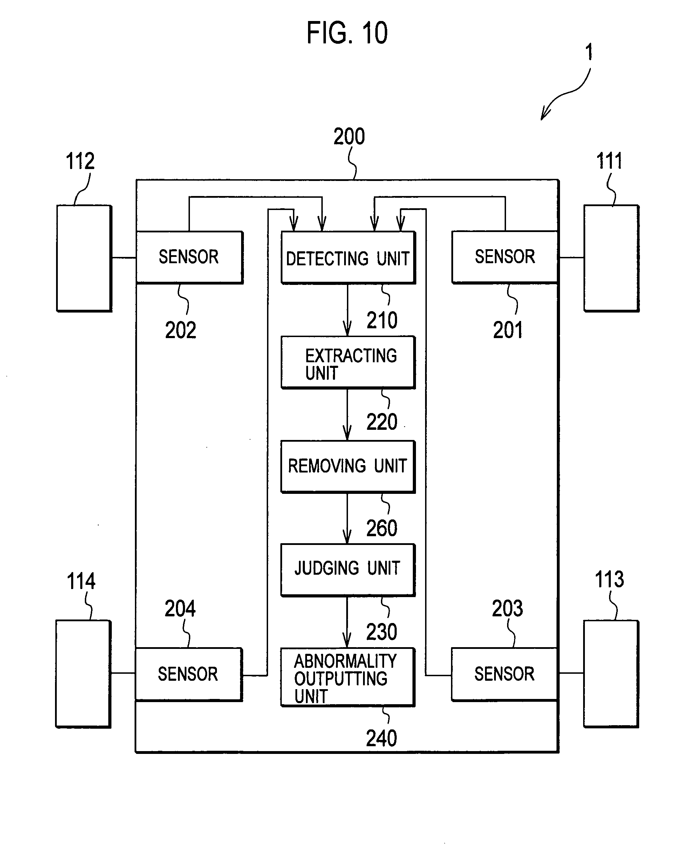

Fig. 10 is a view showing another example of the abnormality judging device 1 in the second embodiment. As shown in Fig. 10, the abnormality judging device 1 includes a removing unit 260 in addition to the abnormality judging device 1 in the first embodiment.

Among the units shown in Fig. 10, the same units as the units shown in Fig. 1 are designated by the same reference numerals. The functions of the units having the same reference numerals are similar to those described with reference to Fig. 1. Accordingly, detailed description thereof will be omitted herein. Note that an input end of the removing unit 260 in this embodiment is supposed to be connected to an output end of the FFT processing unit 223.

The removing unit 260 is removing means which removes signals (instantaneous values) not exceeding an envelope which substantially passes the minimum values of the respective amplitudes of the signals converted by the FFT processing unit 223 (i.e., the signal showing a temporal variation in the frequency).

Fig. 11 is a view showing an envelope H applicable to the signals converted by the FFT processing unit 223. As shown in Fig. 11, a curve that passes the minimum value A of an amplitude of a signal of an order component P1, the minimum value B of an amplitude of a signal of an order component P2, ..., and the minimum value R of an amplitude of a signal of an order component of P18 constitutes the envelope H.

Fig. 12 is a view showing a frequency f1 of the order component P1 and a vicinity of the frequency f1. As shown in Fig. 12, only a size L2 out of the sizes of P1 is left when the signals (the instantaneous values) not exceeding the envelope H are removed.

Accordingly, the signals of the multiple specific order components (P1, P2, P3, ..., P18) exceeding the envelope H (the signals excluding the portions surrounded by the envelope H) are left by removing the signals (the instantaneous values) not exceeding the envelope H.

The remaining specific order component signals are characteristic signals concerning the periodical signal caused by occurrence of detachment or the like on the tires 111 to 114. For this reason, the judging unit 230 can judge, with higher accuracy, whether or not the tire is abnormal by using only the remaining specific order component signals.

The judging unit 230 judges that any of the tires is abnormal in a case where the total sum (or the average value) of the multiple specific order component signals exceeding the envelope H exceeds the predetermined threshold. Note that the above-described weighting unit 250 may put weights respectively on the multiple specific order component signals not removed by the removing unit 260. Moreover, the judging unit 250 may judge that any of the tires is abnormal in a case where the total sum (or the average value) of the multiple specific order component signals weighted by the weighting unit 250 exceed the predetermined threshold.

### [Third embodiment]

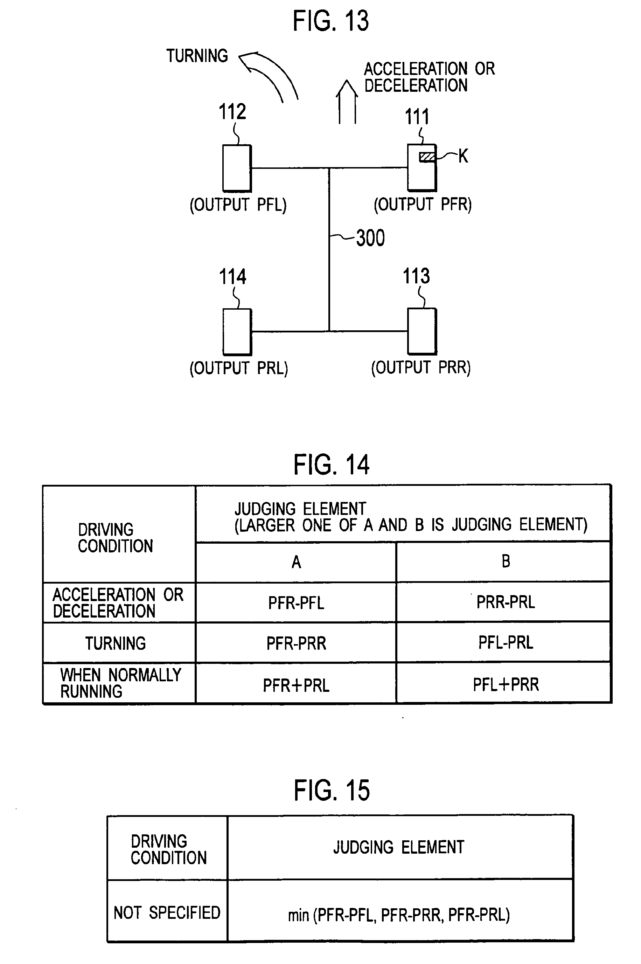

Fig. 13 is a view showing the tires 111 to 114 and signals PFR, PFL, PRR and PRL (judgment output values) corresponding to the tires 111 to 114 according to a third embodiment.

Here, the signal PFR corresponding to the tire 111 is the signal concerning the tire 111, and is also the signal to be outputted to the judging unit 230. The signal PFL corresponding to the tire 112 is the signal concerning the tire 112, and is also the signal to be outputted to the judging unit 230.

The signal PRR corresponding to the tire 113 is the signal concerning the tire 113, and is also the signal to be outputted to the judging unit 230. The signal PRL corresponding to the tire 114 is the signal concerning the tire 114, and is also the signal to be outputted to the judging unit 230.

Moreover, examples of the signals PFR, PFL, PRR and PRL corresponding to the tires 111 to 114 include the signals outputted from the extracting unit 220 (the adaptive control unit 222b, the FFT processing unit 223, the specific order component extracting unit 224, the tracking filter 225 or the synchronous adding unit 226), those from the weighting unit 250 or from the removing unit 260 which are described above. In this embodiment, the detecting unit 210, the extracting unit 220, and the judging unit 230 are supposed to execute the respective functions for each tire.

The judging unit 230 is the judging means which judges that the tire is abnormal in a case where a difference value between two signals outputted to the judging unit 230 exceeds the predetermined threshold.

For example, the judging unit 230 judges that the tire is abnormal when the difference value between the signals (such as PFR and PFL, or PRR and PRL) corresponding to the respective two tires (such as the front tires 111 and 112, or the rear tires 113 and 114), which are rotatably and pivotally supported on the same shaft, among the signals outputted to the judging unit 230 exceeds the predetermined threshold.

According to this characteristic, the judging unit 230 can judge that any of the tires is abnormal by comparing the signal concerning one of the tires with the signal concerning the other tires.

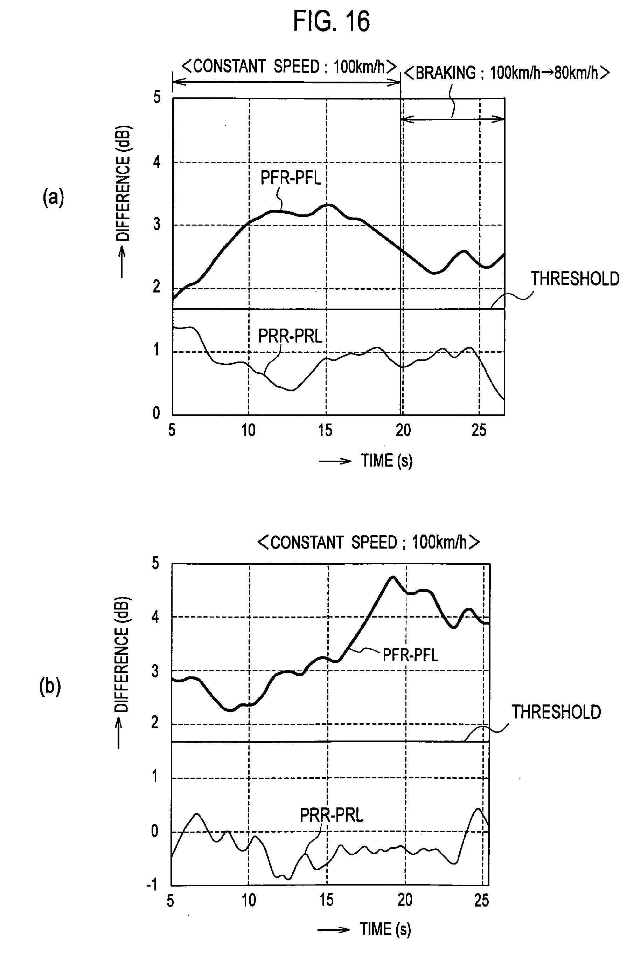

Next, an example of the abnormality judging device 1 in this embodiment will be described with reference to Figs. 16 (a) and 16(b) . In this example, a protrusion was attached to the right front tire 111. The protrusion had a shape with the dimensions of: the bottom surface; a length in the circumferential direction of the tire 20 mm × a length in the width direction of the tire 200 mm, the height; 2 mm, and the upper surface; a length in the circumferential direction of the tire 16 mm × a length in the width direction of the tire 200 mm.

### <Results of example>

Fig. 16 (a) is a view showing a temporal variation of (PFR - PFL) and (PRR - PRL) in a case where a vehicle runs at a constant speed of 100 km/h, and then where the vehicle brakes (from 100 km/ to 80 km/h). Fig. 16 (b) is a view showing a temporal variation of (PFR - PFL) and (PRR - PRL) in a case where the vehicle runs at the constant speed of 100 km/h.

As shown in Figs. 16(a) and 16(b), it is apparent that only (PFR - PFL) exceeded the threshold. For this reason, the abnormality judging device 1 was able to judge that the front tire 111 was abnormal because (PFR - PFL) was positive, that is, because PFR was greater than PFL.

Moreover, as shown in Fig. 16 (a), it is apparent that the (PFR - PFL) and (PRR - PRL) do not vary largely in a case where the vehicle brakes (from 100 km/h to 80 km/h). Thus, the abnormality judging device 1 was able to judge that the front tire 111 was abnormal, without being influenced by driving conditions (the constant speed, braking, and the like) of the vehicle.

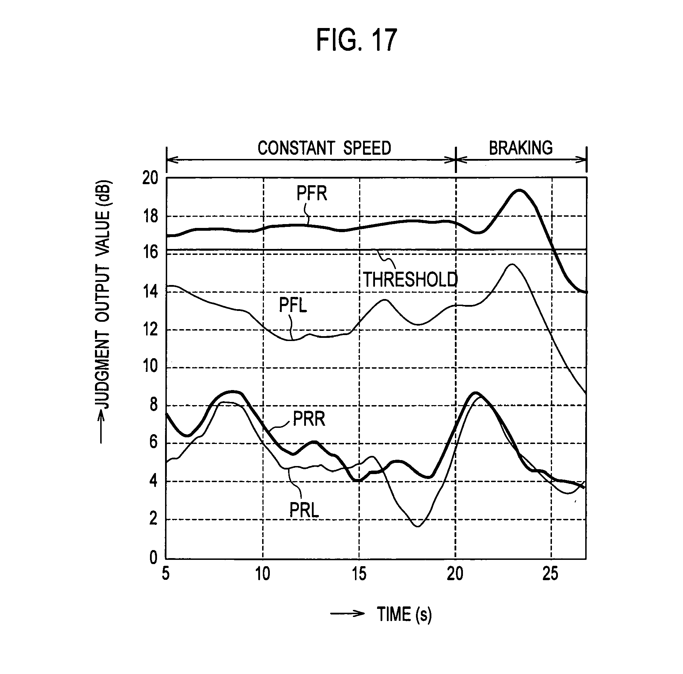

Now, Fig. 17 is a view showing a temporal variation of the PFR, PFL, PRR and PRL corresponding to the respective tires 111, 112, 113 and 114. Here, the protrusion is attached only to the front right tire 111 as well. For this reason, an abnormality occurs only on the right front tire 111.

As shown in Fig. 17, PFR corresponding to the tire 111 exceeds the threshold when the vehicle is running at a constant speed. Accordingly, the abnormality judging device 1 can judge the abnormality of the tire 111 at a constant speed of the vehicle.

However, as shown in Fig. 17, PFR corresponding to the tire 111 exceeded the threshold in a certain period (a period from 20 (s) to 25 (s) shown in Fig. 17) when the vehicle braked. On the other hand, PFR corresponding to the tire 111 fell below the threshold after the certain period elapsed, even though the tire 111 was abnormal.

Accordingly, PFR corresponding to the tire 111 is above and below the threshold as a reference in a case where the vehicle brakes. For this reason, the abnormality judging device 1 may fail to judge the abnormality of the tire 111 accurately at the time of braking the vehicle.

Consequently, in the present example, instead of judging whether or not the signals corresponding to the respective tires exceed the threshold, the abnormality judging device 1 selects two signals out of the signals corresponding to the respective tires, and then judges whether or not a "difference value" between the two signals exceeds the threshold, as shown in Figs. 16(a) and 16(b). In this way, the abnormality judging device 1 can judge, with high accuracy, which tire (the tire 111 in this case) is abnormal even at the time of braking the vehicle, by using the above-described "difference value" which is concerned largely only with a defect of the tire.

Note that the difference value (PFR - PFL) between the signals corresponding to the respective front tires 111 and 112 and the difference value (PRR - PRL) between the signals corresponding to the respective rear tires 113 and 114 are used in Figs. 16(a) and 16(b). However, the present invention is not limited thereto.

To be more precise, it is also possible to use the difference value between the signals corresponding to the respective front and rear tires 111 and 113 (or the tires 112 and 114) . Alternatively, it is possible to use the difference value between the signals corresponding to the respective tires 111 and 114 (or the tires 112 and 113) located on a diagonal line.

Next, other processes for judging whether or not the tire is abnormal will be described. Here, the judging unit 230 determines any two signals out of the signals outputted to the judging unit 230 in response to the driving conditions (such as running at a constant speed, acceleration or deceleration of a vehicle) and judges whether or not the tire is abnormal by use of the two signals thus determined. Details thereof are as follows.

The judging unit 230 judges that the tire is abnormal in a case where the difference value (such as PFR - PFL or PRR - PRL) between the signals (such as PFR and PFL or PRR and PRL) corresponding to the respective two tires (such as the front tires 111 and 112 or the rear tires 113 and 114) rotatably and pivotally supported by the same shaft, out of the signals outputted to the judging unit 230, exceeds the predetermined threshold at the time when the vehicle is running at a constant speed or in the course of acceleration or deceleration.

Moreover, the judging unit 230 judges that the tire is abnormal in a case where the difference value (such as PFR - PRR or PFL - PRL) between the signal PFR (or the signal PFL) corresponding to the front tire 111 (or the tire 112) and the signal PRR (or the signal PRL) corresponding to the rear tire 113 (or the tire 114) provided in the traveling direction of the front tire 111 (or the tire 112), out of the signals outputted to the judging unit 230, exceeds the predetermined threshold at the time when the vehicle is running at a constant speed or is turning.

In addition, the judging unit 230 judges that the tire is abnormal in a case where an added value (such as PFR + PRL or PFL + PRR) of the signal PFR (or the signal PFL) corresponding to the front tire 111 (or the tire 112) and the signal PRL (or the signal PRR) corresponding to the rear tire 114 (or the tire 113) provided in the diagonal direction to the front tire 111 (or the tire 112), out of the signals outputted to the judging unit 230, exceeds the predetermined threshold at the time when the vehicle is running normally (for example, accelerating or decelerating + turning).
Next, the other processes for judging whether or not the tire is abnormal will be described more in detail with reference to Fig. 14. Here, the judging unit 230 judges whether or not the tire is abnormal in response to the "driving conditions of the vehicle" and "judging elements". Note that the judging unit 230 can specify any one of the "driving conditions of the vehicle" by use of an acceleration sensor.

Fig. 14 is a view showing the driving conditions of the vehicle and the judging elements used for the driving conditions. The driving conditions of the vehicle include acceleration or deceleration, turning, and normal running (for example, accelerating or decelerating + turning) of the vehicle.

Meanwhile, the judging elements corresponding to acceleration or deceleration of the vehicle include a judging element A of (PFR - PFL) and a judging element B of (PRR - PRL) . The judging elements corresponding to turning of the vehicle include a judging element A of (PFR - PRR) and a judging element B of (PFL - PRL). The judging elements corresponding to normal running (for example, acceleration or deceleration + turning) include a judging element A of (PFR + PRL) and a judging element B of (PFL + PRR).

When the vehicle is accelerated, the judging unit 230 specifies a larger judging element out of the judging element A of (PFR - PFL) and the judging element B of (PRR - PRL). The judging unit 230 judges that the tire concerning the judging element is abnormal in a case where the specified judging element exceeds the predetermined threshold.

For example, when a defect K (refer to Fig. 13) such as detachment exists on the tire 111, the periodical signal concerning the defect K is generated by revolving the tire 111.

For this reason, the signal PFR concerning the tire 111 is greater than the signal PFL concerning the tire 112, and thereby the judging element A (PFR - PFL) is greater than the judging element B (PRR - PRL). In this case, the judging unit 230 selects the judging element A (PFR - PFL). The judging element 230 judges that the tire 111 is abnormal when the selected judging element A exceeds the predetermined threshold.

Moreover, when the vehicle turns, the judging unit 230 specifies a larger judging element out of the judging element A of (PFR - PRR) and the judging element B of (PFL - PRL). The judging element 230 judges that any of the tires is abnormal when the judging element exceeds the predetermined threshold.

In addition, when the vehicle is normally running (for example, accelerating or decelerating + turning), the judging unit 230 specifies a larger judging element out of the judging element A of (PFR + PRL) and the judging element B of (PFL + PRR) . The judging element 230 judges that any of the tires is abnormal when the judging element exceeds the predetermined threshold.

Here, the predetermined threshold is equivalent to a difference value between the signals corresponding to the respective tires which are normal. For example, in a case of using the judging element A of (PFR - PFL), the predetermined threshold is the difference value between the signal PFR and the signal PFL to be outputted to the judging unit 230 at the time of using the normal tires 111 and 112 (the tires not having a defect) .

In a case of using the judging element B of (PRR - PRL), the predetermined threshold is the difference value between the signal PRR and the signal PRL to be outputted to the judging unit 230 at the time of using the normal tires 113 and 114 (the tires not having a defect).

Furthermore, the predetermined threshold is similarly determined in the cases of using other judging elements of (PFR - PRR), (PFL - PRL), (PFR + PRL) and (PFL + PRR).

Here, the predetermined threshold may be a preset value or the average value of the stored difference values obtained by storing the difference values of the respective signals corresponding to the normal tires.

According to these characteristics, in a case where the vehicle is accelerated, a greater load is applied to the rear tires 113 and 114 than to the front tires 111 and 112, and a difference in a wheel speed is caused therebetween. For this reason, when the vehicle is accelerated, the judging unit 230 can judge whether or not the rear tires 113 and 114 are abnormal, by using the signal PRR and the signal PRL concerning the rear tires 113 and 114 (refer to "acceleration or deceleration" and "judging element B" shown in Fig. 14).

On the other hand, in a case where the vehicle is decelerated, a greater load is applied to the front tires 111 and 112 than to the rear tires 113 and 114, and the difference in the wheel speed is caused therebetween. For this reason, when the vehicle is decelerated, the judging unit 230 can judge whether or not the front tires 111 and 112 are abnormal by using the signal PFR and the signal PFL concerning the front tires 111 and 112 (refer to "acceleration or deceleration" and "judging element A" shown in Fig. 14).

Moreover, in a case where the vehicle is turning left, a greater load is applied to the tires 111 and 113 located outside, than to the tires 112 and 114 located inside, and the difference in the wheel speed is caused therebetween. For this reason, when the vehicle is turning left, the judging unit 230 can judge whether or not the tires 111 and 113 located outside are abnormal by using the signal PFR and the signal PRR concerning the tires 111 and 113 located outside (refer to "turning" and "judging element A" shown in Fig. 14).

In a case where the vehicle is turning right, a greater load is applied to the tires 112 and 114 located outside, than to the tires 111 and 113 located inside, and the difference in the wheel speed is caused therebetween. For this reason, when the vehicle is turning right, the judging unit 230 can judge whether or not the tires 112 and 114 located outside are abnormal by using the signal PFL and the signal PRL concerning the tires 112 and 114 located outside (refer to "turning" and "judging element B" shown in Fig. 14).

In addition, even when the vehicle is normally running (for example, accelerating or decelerating + turning), the judging unit 230 can judge whether or not the tires concerning normal running of the vehicle are abnormal due to similar reasons to the foregoing (refer to "normal running" and "judging elements A and B" shown in Fig. 14).

Next, other examples of the processes for judging whether or not the tire is abnormal will be concretely described with reference to Fig. 15. Here, the judging unit 230 judges whether or not the tire is abnormal by using a judging element which is equivalent to the "smallest difference value" out of the difference values between two values concerning the tires.

Fig. 15 is a view showing the driving condition (which is not specified herein) of the vehicle and the judging element. The judging unit 230 judges that the tire concerning the judging element is abnormal in a case where the judging element equivalent to the smallest difference value between the two signals (such as min(PFR-PFL, PFR-PRR, PFR-PRR, PFR-PRL)) exceeds the predetermined threshold.

Here, when the vehicle is accelerated, the load is applied to the rear tires 113 and 114, and the difference value (PFR - PFL) between the signals concerning the respective front tires 111 and 112 is the smallest as compared with other difference values between the signals. For this reason, by using the smallest difference value (PFR - PFL) as the judging element, the judging unit 230 can judge whether or not the tires 111 and 112 concerning the judging element are abnormal without specifying whether or not the vehicle is accelerated.

In contrast, when the vehicle is decelerated, the load is applied to the front tires 111 and 112, and the difference value (PRR - PRL) between the signals concerning the respective rear tires 113 and 114 is the smallest as compared with other difference values between the signals. For this reason, by using the smallest difference value (PRR - PRL) as the judging element, the judging unit 230 can judge whether or not the tires 113 and 114 concerning the judging element are abnormal without specifying whether or not the vehicle is decelerated.

Similarly, when the vehicle is turning, the load is applied to the right side or the left side of the traveling direction of the vehicle, and the difference value (PFR - PRR) between the signals concerning the respective tires 111 and 113 or the difference value (PFL - PRL) between the signals concerning the respective tires 112 and 114 is the smallest as compared with other difference values between the signals.

For this reason, by using any one of the smallest difference value (PFR - PRR) and (PFL - PRL) as the judging element, the judging unit 230 can judge whether or not the tires 111 and 113 (or the tires 112 and 114) concerning the judging element are abnormal, without specifying whether or not the vehicle is turning.

Even when the vehicle is normally running (for example, accelerating or decelerating + turning), the judging unit 230 can judge whether or not the tires concerning the judging element in a case of normal running of the vehicle are abnormal, due to similar reasons to the foregoing.

Suppose that there is a difference between the average value of the signals corresponding to the front tire 111 (or the tire 112) and the average value of the signals corresponding to the rear tire 113 (or the tire 114) among the signals outputted to the extracting unit 220. In this case, the judging unit 230 may judge that the tire is abnormal when the difference value between the two signals exceeds the predetermined threshold after any one of the average values is aligned with the other average value (so-called offset adjustment).

Here, a connecting member is provided between the shaft rotatably and pivotally supporting the front tires 111 and 112 and the shaft rotatably and pivotally supporting the rear tires 113 and 114 in order to connect both of the shafts.

In this way, since the connecting member is provided, the physical quantity generated from the front tire 111 (or the tire 112) and the physical quantity generated from the rear tire 113 (or the tire 114) are subjected to dispersion or the like by the connecting member, and thereby the sizes of the respective physical quantities may be different. For this reason, the average value of the signals PFR (or the signals PFL) concerning the front tire 111 (or the tire 112) is deviated from the average value of the signals PRR (or the signals PRL) concerning the rear tire 113 (or the tire 114).

In this embodiment, by executing the offset adjustment, the judging unit 230 eliminates the deviation between the average value of the signals PFR (or the signals PFL) concerning the front tire 111 or the tire 112 and the average value of the signals PRR (or the signals PRL) concerning the rear tire 113 (or the tire 114).

In this way, the judging unit 230 can calculate the difference value between the signal concerning the front tire and the signal concerning the rear tire more appropriately. Thereby, the judging unit 230 can judge, with high accuracy, whether or not the tire is abnormal.

### Industrial Applicability

According to the present invention, it is possible to judge, with high accuracy, whether or not a tire is abnormal.

## Claims

1. An abnormality judging device comprising:
detecting means which detects a physical quantity generated from a revolving tire;
variable sampling means which samples a signal corresponding to the physical quantity detected by the detecting means, at a cycle corresponding to the revolving speed of the tire;
FFT processing means which converts a signal along the time axis, sampled by the variable sampling means, into a signal along the frequency axis; and
judging means which judges that the tire is in an abnormal state in a case where the signal converted by the FFT processing means exceeds a predetermined threshold.

2. The abnormality judging device according to claim 1, further comprising an adaptive digital filter which extracts a specific signal from the signals sampled by the variable sampling means, and wherein
the FFT processing means converts the signal along the time axis extracted by the adaptive digital filter, into the signal along the frequency axis.

3. The abnormality judging device comprising:
detecting means which detects a physical quantity generated from the revolving tire;
variable sampling means which samples a signal corresponding to the physical quantity detected by the detecting means, at a cycle corresponding to a revolving speed of the tire;
specific order component extracting means which extracts signals of a plurality of specific order components from signals sampled by the variable sampling means; and
judging means which judges that the tire is in an abnormal state when the signals extracted by the specific order component extracting means exceed a predetermined threshold.

4. The abnormality judging device according to claim 3, further comprising an adaptive digital filter which extracts a specific signal from the signals sampled by the variable sampling means, and wherein
the specific order component extracting means extracts the signals of the plurality of specific order components from the signals extracted by the adaptive digital filter.

5. An abnormality judging device comprising:
detecting means which detects a physical quantity generated from a revolving tire;
variable sampling means which samples a signal corresponding to the physical quantity detected by the detecting means, at a cycle corresponding to the revolving speed of the tire;
adding means which adds up the signals per unit of revolutions sampled by the variable sampling means, sequentially for each unit of revolutions; and
judging means which judges that the tire is in an abnormal state when the signals added up by the adding means exceed a predetermined threshold.

6. The abnormality judging device according to claim 5, further comprising an adaptive digital filter which extracts a specific signal from the signals sampled by the variable sampling means, and wherein
the adding means adds up the signals per unit of revolutions extracted by the adaptive digital filter sequentially for each unit of revolutions.

7. An abnormality judging device comprising:
detecting means which detects a physical quantity generated from a revolving tire;
specific order component extracting means which extracts signals of a plurality of specific order components corresponding to a revolving speed of the tire, from signals corresponding to the physical quantity detected by the detecting means; and
judging means which judges that the tire is in an abnormal state when the signals extracted by the specific order component extracting means exceed a predetermined threshold.

8. An abnormality judging device comprising:
detecting means which detects a physical quantity generated from a revolving tire, for each of the tires;
extracting means for extracting a specific signal from signals corresponding to the physical quantity detected by the detecting means, for each of the tires; and
judging means for judging that the tire is abnormal when a difference value between two signals extracted by the extracting means exceeds a predetermined threshold.

9. The abnormality judging device according to claim 8, wherein the extracting means is an adaptive digital filter.

10. The abnormality judging device according to claim 8, wherein the judging means judges that the tire is abnormal in a case where any one of the difference value between signals corresponding respectively to two tires rotatably and pivotally supported on the same shaft and the difference value between a signal corresponding to a front tire and a signal corresponding to a rear tire provided in a traveling direction of the front tire, out of the signals extracted by the extracting means, exceeds the predetermined threshold.

11. The abnormality judging device according to claim 10, wherein the judging means judges that the tire is abnormal in a case where the difference value between the signals corresponding respectively to the two tires rotatably and pivotally supported on the same shaft, out of the signals extracted by the extracting means, exceeds the predetermined threshold at the time when a vehicle is running at a constant speed or is in the course of acceleration or deceleration.

12. The abnormality judging device according to claim 8, wherein the judging means judges that the tire is abnormal in a case where the difference value between the signal corresponding to a front tire and the signal corresponding to a rear tire provided in the traveling direction of the front tire, out of the signals extracted by the extracting means, exceeds the predetermined threshold at the time when a vehicle is running at a constant speed or is turning.

13. The abnormality judging device according to claim 8, wherein the judging means judges that the tire is in the abnormal state when the difference value between the signal corresponding to a front tire and the signal corresponding to a rear tire provided in a diagonal direction to the front tire out of the signals extracted by the extracting means exceeds the predetermined threshold when a vehicle is running normally.

14. The abnormality judging device according to claim 8, wherein the threshold is equal to a difference value of each of the signals corresponding to respective tires which are normal.

15. The abnormality judging device according to any one of claims 12 and 13, wherein, in a case where there is a difference between the average value of the signals corresponding to the front tire and the average value of the signals corresponding to the rear tire out of the signals extracted by the extracting means, the judging means judges that the tire is abnormal at the time when the difference value between the signal corresponding to the front tire and the signal corresponding to the rear tire exceeds the predetermined threshold after any one of the average values is aligned with the other average value.

16. The abnormality judging device according to any one of claims 8 and 9, wherein the judging means judges that the tire is abnormal when the difference value between the two smallest signals out of the signals extracted by the extracting means exceeds the predetermined threshold.
